# EUROPEAN PATENT APPLICATION

(11) **EP 4 825 724 A1**
(43) Date of publication of application: **21.10.2026**
(21) Application number: 26167604.3
(22) Date of filing: 25.03.2026
(51) Int. Cl.: B64B 1/62, B64B 1/64, B64D 27/355, B64D 41/00

(54) **AIRSHIP USING HYDROGEN FOR LIFT AND POWER GENERATION**

(30) Priority: 14.04.2025 FI 20255337
(71) Applicant: KELLUU OY, 80330 Reijola (FI)
(72) Inventor: Lintu, Lintu, 80330 Reijola (FI); Kärki, Hermanni, 80330 Reijola (FI); Hietala, Janne, 80330 Reijola (FI)
(74) Representative: Moosedog Oy

(57) **Abstract**

The present disclosure provides an airship (100) comprising a hydrogen tank (102) to store hydrogen at a first pressure, a pressure regulator (104) to receive a first hydrogen stream (106) from the hydrogen tank (102) and regulate the pressure of the first hydrogen stream (106) to a second level to generate a second hydrogen stream (108), a flow splitter (110) to receive the second hydrogen stream (108) from the pressure regulator (104) and split the second hydrogen stream (108) into a first fraction (114) and a second fraction (118), a fuel cell (112, 302) to collect the first fraction (112) of the second hydrogen stream (108) and generate electrical energy from the collected first fraction (114), and an envelope storage (116, 200, 312) to receive the second fraction (118) of the second hydrogen stream (108) and accumulate the received second fraction (118) of hydrogen to generate a lifting force.

## Description

### TECHNICAL FIELD

The present disclosure generally relates to aerial transport systems. Further, the present disclosure particularly relates to an airship that utilises hydrogen for generating lift and electrical energy.

### BACKGROUND

Lighter-than-air aerial vehicles have increasingly been adopted for various applications including atmospheric research, long-range surveillance, logistics, and telecommunications. Such aerial vehicles rely on the displacement of atmospheric gases to generate lift, thereby enabling stationary hovering or controlled flight at varying altitudes. Unlike fixed-wing aircraft or rotorcraft, lighter-than-air systems often require minimal propulsion to remain airborne, resulting in reduced energy consumption over prolonged durations. Deployment of such systems in high-altitude or remote regions allows for extended mission cycles without frequent refueling or runway dependence. Traditionally, lifting gases such as helium have been used due to their inert characteristics, while hydrogen has also been considered due to availability and lower density. Parallel efforts have focused on integrating onboard energy generation systems into such aerial vehicles to support instrumentation, communication equipment, and navigational subsystems.

Conventional aerial systems have faced several operational constraints arising from the separation of energy generation and lift control. Independently managed lifting gas storage and fuel delivery systems contribute to added weight, structural complexity, and reduced efficiency in hydrogen utilization. In many cases, lifting gas compartments are statically filled, offering limited control during variable altitude or payload conditions. Energy supply systems in such aerial vehicles often depend on fixed or unidirectional gas flows that are unable to adapt to fluctuating power demands during different phases of flight. As a result, such aerial platforms face challenges in real-time adaptation, autonomous operation, and coordinated gas resource distribution. Absence of dynamic gas management based on feedback parameters such as altitude, internal pressure variations, or electrical load further restricts the scalability and responsiveness of such platforms.

In light of the above discussion, there exists an urgent need for solutions that overcome the problems associated with conventional systems and/or techniques for aerial platforms that require coordinated management of buoyancy and energy generation.

### SUMMARY

An aim of the present disclosure is to provide an airship that enables controlled utilisation of a gaseous medium for concurrent aerial lift generation and onboard energy supply. A gaseous stream is processed and selectively distributed across multiple subsystems to achieve buoyancy and power output in response to operational demands. The disclosed airship facilitates dynamic regulation of gas flow and pressure to support altitude control and electrical generation without structural dependency on external sources. Further, the system supports real-time balancing of lift and energy requirements by redistributing available gaseous resources between interconnected subsystems.

Throughout the description and claims of this specification, the words "comprise" and "contain" and variations of the words, for example "comprising" and "comprises", mean "including but not limited to", and do not exclude other components, integers or steps. Moreover, the singular encompasses the plural unless the context otherwise requires: in particular, where the indefinite article is used, the specification is to be understood as contemplating plurality as well as singularity, unless the context requires otherwise.

### BRIEF DESCRIPTION OF DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 illustrates a diagram of an airship as per one embodiment of the present disclosure;
FIG. 2 illustrates an envelope storage as per an embodiment of the present disclosure;
FIG. 3 illustrates a schematic diagram of a hydrogen separator as per an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an airship, comprising:
a hydrogen tank is configured to store hydrogen at a first pressure;
a pressure regulator configured to:
   receive a first hydrogen stream from the hydrogen tank; and
   regulate the pressure of the first hydrogen stream to a second level to generate a second hydrogen stream;
a flow splitter configured to:
   receive the second hydrogen stream from the pressure regulator; and
   split the second hydrogen stream into a first fraction and a second fraction;
a fuel cell is configured to:
   collect the first fraction of the second hydrogen stream; and
   generates electrical energy from the collected first fraction of the second hydrogen stream;
an envelope storage is configured to:
   receive the second fraction of the second hydrogen stream; and
   accumulate the received second fraction of hydrogen to generate a lifting force, and
   wherein the flow splitter is configured to dynamically adjust a capacity of the first fraction and the second fraction.

The term *"airship"* as used throughout the present disclosure refers to a lighter-than-air vehicle comprising a series of interconnected components capable of hydrogen-based buoyancy and onboard energy generation. The airship comprises a hydrogen tank. The term *"hydrogen tank"* as used throughout the present disclosure refers to a gas storage vessel having structural integrity to retain hydrogen at high internal pressures. Hydrogen is stored in the hydrogen tank at a first pressure such as 100 bar to 300 bar, 150 bar, 200 bar, or 250 bar. An internal pressure above atmospheric pressure that is utilized for high-density hydrogen retention in compressed form. The hydrogen tank is made up of composite or alloy materials that shows resistance to hydrogen embrittlement. The hydrogen stored at the first pressure is used as both a lifting gas and a fuel source, enabling multiple use of a single stored medium. Use of the hydrogen tank facilitates extended flight duration through energy autonomy and reduces reliance on external infrastructure for propulsion. Additionally, storing hydrogen under the first pressure reduces the volumetric requirements of storage systems, allowing a more compact integration of the tank within the structure of airship.

The airship further comprises a pressure regulator. The term *"pressure regulator"* as used throughout the present disclosure refers to a gas control component that reduces and maintains the pressure of a received hydrogen stream at a designated output level. The pressure regulator receives a first hydrogen stream from the hydrogen tank. The term *"first hydrogen stream"* as used throughout the present disclosure refers to a directed flow of compressed hydrogen gas derived from the hydrogen tank. The pressure regulator regulates the pressure of the first hydrogen stream to a second level. The term *"second level"* refers to a pressure value minimized from the first pressure and matched to operational tolerances of downstream components, comprising fuel cells and hydrogen lift chambers. Upon completion of the pressure regulation process, the pressure regulator generates a second hydrogen stream. The term *"second hydrogen stream"* refers to a hydrogen flow output from the pressure regulator at the second level pressure. The pressure regulator provides controlled downstream hydrogen distribution, prevents damage to pressure-sensitive equipment, and supports safe hydrogen transfer for varied applications. The regulation of first hydrogen stream to second pressure level enables stable operation of electrochemical and buoyancy subsystems. Furthermore, use of the pressure regulator allows adaptation to environmental factors such as altitude and ambient temperature, which would otherwise influence internal pressures and hydrogen flow rates. The pressure regulator thereby enables operational flexibility by accommodating a range of system-specific requirements with minimal mechanical reconfiguration.

The airship comprises a flow splitter. The term *"flow splitter"* as used throughout the present disclosure refers to a directional control device or conduit that divides a single gas stream into two or more discrete gas flow fractions. The flow splitter receives the second hydrogen stream from the pressure regulator and splits the second hydrogen stream into a first fraction and a second fraction. The term *"first fraction"* as used throughout the present disclosure refers to a portion of the second hydrogen stream allocated for energy production, and the term *"second fraction"* refers to a portion of the second hydrogen stream allocated for generating lift. The splitting of the second hydrogen stream allows simultaneous fulfilment of propulsion and buoyancy demands through a shared input source. The use of the flow splitter facilitates dynamic adjustment of hydrogen allocation, supporting variable energy needs during different flight phases and allowing lift adjustments for altitude control. The bifurcation of the second hydrogen stream eliminates requirement of separate tank for fuel cell and the buoyancy , thereby reduce weight of airship and increase energy efficiency thereby overall flight time.

The airship also comprises a fuel cell. The term *"fuel cell"* as used throughout the present disclosure refers to an energy conversion device that electrochemically reacts hydrogen with an oxidant, typically ambient oxygen, to generate electrical energy. The fuel cell collects the first fraction of the second hydrogen stream and generates electrical energy from the collected first fraction. The term *"collects"* refers to the intake of the first fraction via conduits or valves into the reaction chamber of the fuel cell. Through the catalytic dissociation of hydrogen molecules, usable electrical power is produced within the fuel cell by the released electrons moving through an external circuit. The fuel cell receives first fraction (e.g., fuel) and oxidising agent into the fuel cell to regulate internal conditions. The H2 (upon introduction) undergoes an electrochemical reaction (at an anode) and splits into protons and electrons. While protons travel through an electrolyte membrane to produce electrical energy, electrons travel through an external circuit. When protons and electrons recombine at the cathode with an oxidant like O₂, water (H₂O) is produced. Onboard electronic systems, propulsion units, navigational instruments, and environmental controls (within the airship) are powered by the generated electrical energy.

Moreover, the airship also comprises an envelope storage. The term *"envelope storage"* as used throughout the present disclosure refers to a gas-retaining volume, formed from a flexible, semi-flexible, or compartmentalized structure, that stores buoyancy gas to generate lift/buoyancy. The envelope storage receives the second fraction of the second hydrogen stream and accumulates the received second fraction to generate a lifting force. The term *"accumulates"* refers to the collection and retention of the second fraction within a closed internal volume until a desired hydrogen quantity is attained. The term *"lifting force"* refers to the buoyant force generated when the density of the accumulated hydrogen is lesser than the surrounding atmospheric air. By using natural buoyancy, the envelope storage minimizes energy consumption and provides an efficient non-mechanical solution of altitude control. The lift/ buoyancy is modulated based on the changes in load, atmospheric pressure, or mission parameters by adjusting the accumulation of hydrogen in the envelope storage. Additionally, using the second fraction for lift generation minimizes hydrogen waste and promotes dual-use efficiency of retained hydrogen.

In an embodiment, the flow splitter may comprise a variable distribution sub-assembly for selectively modulating the division ratio of the second hydrogen stream into the first fraction and the second fraction. The term *"variable distribution assembly"* as used throughout the present disclosure refers to a structure or control interface that modifies flow characteristics of the output channels in response to measured or computed operational demands. The flow splitter dynamically adjusts a capacity of the first fraction and the second fraction based on one or more factors, including energy demand, required buoyancy force, and internal pressure within the envelope storage. The term *"energy demand"* refers to the instantaneous or projected electrical power required by onboard systems that utilize electrical energy generated by the fuel cell. The term *"required buoyancy force"* refers to the upward force needed to support the current structural load of the airship, maintain or change altitude, or compensate for payload variation. The term *"internal pressure"* refers to the force exerted by the accumulated hydrogen within the envelope storage, wherein the force exerted reflects the fill level and expansion status of the gas containment volume. Adjusting flow ratios based on aforesaid parameters allows fine control over energy production and altitude. During ascent, higher energy demand may result in increased allocation to the first fraction; during hover or descent, shifting to the second fraction assists in buoyancy optimization. By linking gas flow management to real-time system requirements, the flow splitter enable reactive control, minimizes excess energy production or lift force, and reduces structural stress on the envelope, thereby supporting thermal, mechanical, and aerodynamic stability of the airship under various operational conditions.

In another embodiment, the airship may comprise a low-pressure pump. The term *"low-pressure pump"* as used throughout the present disclosure refers to a gas transfer device that enables movement of hydrogen at minimized pressure levels from one location to another with minimal compression. The low-pressure pump receives the second fraction of the second hydrogen stream from the flow splitter and transfers the second fraction to the envelope storage. The transfer enables the controlled delivery of hydrogen from the flow splitter to the envelope storage without relying fully on pressure differential. Use of the low-pressure pump prevents hydrogen backflow, enable control of fill rate, and maintains uniform pressure distribution within the envelope. The *low-pressure* pump enable active movement of hydrogen even under conditions where internal pressure gradients are not sufficient to drive passive flow. The pump is beneficial in high-altitude environments or when the envelope has already accumulated substantial volumes of hydrogen, reducing differential pressure. Furthermore, controlled pumping reduces turbulence or pulsed entry that could destabilize envelope shape.

In a yet other embodiment, the fuel cell generates heat during the process of electrical energy generation and releases a discharge stream comprising water vapor and unused hydrogen. The term *"discharge stream"* as used throughout the present disclosure refers to an outflow of byproducts resulting from the electrochemical oxidation of hydrogen within fuel cell. The envelope storage receives the remaining hydrogen from the discharge stream. Redirecting the hydrogen of discharge stream to the envelope storage supplements the second fraction used for lift and to maintain internal pressure within the envelope storage without drawing further hydrogen from the hydrogen tank. Additionally, routing the hydrogen of discharge stream also helps to stabilize the temperature inside the envelope due to heat carried by hydrogen of discharge stream.

In a yet other embodiment, the airship may comprise a hydrogen separator. The term *"hydrogen separator"* as used throughout the present disclosure refers to a component or subsystem that separates hydrogen from a composite gas mixture, such as water vapor, oxygen, and inert gases. After receiving the discharge stream from the fuel cell, the hydrogen separator separates the hydrogen and moves separated hydrogen to the envelope storage. The hydrogen separator reduces waste of the unreacted hydrogen . The hydrogen separator allows hydrogen resources to be preserved during long flights or in areas without refuelling facilities. The hydrogen separator maintains lift-generating capability by preventing contamination of the internal gas environment (of envelope storage) by eliminating any remaining water vapor and non-hydrogen gases. The hydrogen separator may operate based on membrane filtration, pressure swing adsorption, or catalytic recovery principles. By integrating the hydrogen separator, the energy generation and lift generation flows can be separated, allowing the hydrogen output from fuel processing to be cleaned and reused separately. Additionally, the hydrogen separator allows for consistent lift performance over long periods of time without requiring excess feed from the hydrogen tank and lessens envelope pressure fluctuation caused by non-hydrogen accumulation.

In a yet other embodiment, the envelope storage may dynamically adjust a volume of the accumulated hydrogen to adjust a lifting force. The term *"volume"* as used throughout the present disclosure refers to the three-dimensional spatial extent of the gas retained within the envelope structure, directly influencing the displacement of atmospheric air. Materials or structural elements in the envelope storage enable controlled expansion or contraction under a range of internal pressures. The lifting force that the hydrogen-filled envelope exerts can be modulated by adjusting the volume. The term *"lifting force"* refers to the buoyant force experienced by the airship due to the density difference between hydrogen and ambient air. The dynamic nature of volume adjustment allows for constant adaptation to environmental variables such as temperature, atmospheric pressure, and payload variations. For instance, the hydrogen may contract at lower ambient temperatures, necessitating the expansion of the envelope volume to sustain a steady lifting force. Reducing volume also aids in making up for the reduced external air density during vertical ascent. The volume of the envelope can be adjusted in real time, allowing for pitch trimming, ascent or descent rate stabilization, and imbalance correction due to irregular gas distribution. The dynamic volume adjustment can reduce strain on structural supports by eliminating over-pressurization scenarios and extending the operational longevity of the envelope storage.

In a yet other embodiment, the airship may comprise a valve positioned between the low-pressure pump and the envelope storage. The term *"valve"* as used throughout the present disclosure refers to a flow control component that regulates the passage of hydrogen by means of adjustable opening, closing, or throttling. The valve regulates a flow rate of the second fraction into the envelope storage. The term *"flow rate"* refers to the quantity of hydrogen gas transferred per unit time from the pump output to the envelope inlet. Regulation of flow rate enables staged filling of the envelope, supports controlled ascent, and avoids sudden pressure surges. The valve can be controlled using feedback-driven controllers, mechanical actuation, or electronic signals, depending on the inputs from external sensors. The valve is disposed downstream from the pump to stabilize flow and pressure before gas enters the envelope. In dynamic atmospheric environments, the valve acts as a dampening interface to filter transient fluctuations in hydrogen delivery. Furthermore, during maintenance, the valve enables safe isolation of the envelope from the pump and other upstream components. During steady-state hovering and transition phases, varying the flow rate enhances the accuracy of flight path execution and facilitates a gradual response to altitude correction commands.

In another embodiment, the airship may comprise a first pressure sensor disposed into the envelope storage and a second pressure sensor disposed outside the airship. The term *"first pressure sensor"* refers to a sensing device mounted internally within the gas retention space of the envelope storage, generating a primary output signal indicative of internal pressure. The term *"second pressure sensor"* refers to a sensing device located externally with respect to the airship structure, generating a secondary output signal indicative of an external pressure exerted onto a wall of the envelope. The internal pressure is used to regulate at least one of the volume of the second fraction, the low-pressure pump, and the flow rate of the second fraction. Variations in the atmosphere, including wind gusts, changes in altitude, and weather-induced fluctuations, are reflected in the measurement from the second pressure sensor. The pressure differential derived from the primary and secondary output signals is used to support the calculation of mechanical stress across the envelope walls. The control unit to maintain safe and efficient filling of the envelope storage based on the pressure differential.

In another embodiment, the envelope storage may comprise a flow modulator disposed at an inlet port of the envelope storage. The term *"flow modulator"* refers to a gas regulation component capable of modifying one or more flow properties such as rate, direction, or turbulence before hydrogen enters the storage volume. The flow modulator controls at least one of the flow rate of the second fraction into the envelope storage, total amount of hydrogen accumulation based on output of the first pressure sensor and the second pressure sensor, and at least one flight parameter. The term *"flight parameter"* refers to measurable operational variables such as ascent rate, attitude, vertical velocity, or altitude deviation. By positioning the flow modulator at the inlet port, intervention is possible before hydrogen physically enters the envelope, resulting in increased stability and more responsive feedback. By regulating the rate and amount of gas flow, the flow modulator optimizes buoyancy with respect to airship balance, preventing pitch or yaw drift. Based on the differential, the flow modulator can manage (delay or accelerate) hydrogen input, establishing equilibrium between internal gas forces and external ambient pressure.

In another embodiment, the airship may also comprise a bleeding duct. The term *"bleeding duct"* as used throughout the present disclosure refers to a venting pathway or controlled conduit for discharging hydrogen gas from the envelope storage into an external environment. The bleeding duct is positioned to direct the hydrogen discharge safely away from critical components and structural elements. The bleeding duct discharges hydrogen based on at least one parameter selected from: the determined internal pressure of the envelope storage, the external pressure exerted onto the wall of the envelope storage, an external ambient temperature, a rate of ascent or descent of the airship, a current altitude of the airship, a wind speed surrounding the airship, and a predefined safety threshold for hydrogen discharge. Both preset calibration inputs and real-time sensor data can trigger the discharge operation. When stored gas thermally expands or when altitude changes quickly, the bleeding duct can be used to vent hydrogen and relieve internal pressure. The hydrogen discharge based on wind speed and ambient temperature provides protection against environmental stressors. Controlled hydrogen release prevents stress and preserves the integrity of the envelope membrane. Furthermore, the bleeding duct can also function as an emergency fail-safe due to the presence of a safety threshold. By controlling hydrogen levels through the bleeding duct, buoyancy equilibrium is preserved and altitude fine-tuning during dynamic flight maneuver can be supported without the need for propulsion-based altitude correction.

In an embodiment, the bleeding duct may discharge hydrogen based on at least one parameter selected from the determined internal pressure of the envelope storage, the external pressure exerted onto the wall of the envelope storage, an external ambient temperature, a rate of ascent or descent of the airship, a current altitude of the airship, a wind speed surrounding the airship, and a predefined safety threshold for hydrogen discharge. The term *"determined internal pressure"* refers to a measured pressure value inside the envelope storage as generated by the first pressure sensor. The term *"external pressure"* refers to the pressure exerted by ambient air on the external wall of the envelope storage as measured by the second pressure sensor. The term *"external ambient temperature"* refers to the temperature of surrounding atmosphere which may affect hydrogen density and volumetric expansion. The term *"rate of ascent or descent"* refers to the vertical velocity of the airship and affects the rate of pressure differential build-up across the envelope structure. The term *"current altitude"* refers to the elevation of airship above sea level which corresponds to changes in external pressure and air density. The term *"wind speed surrounding the airship"* refers to the velocity of movement of air near the envelope storage, wherein the wind speed influences structural loads and aerodynamic behaviour. The term *"predefined safety threshold"* refers to a preset condition programmed into the control system, triggering hydrogen discharge for safety. Altitude correction is supported without the need for propulsion systems, overpressure situations can be avoided, and the structural compliance of envelope wall is maintained by releasing hydrogen in accordance with the designated parameters. The risk of membrane rupture or instability of buoyancy during environmental variation is reduced by controlled discharge based on external conditions. The discharge operation considers both internal pressure and external pressure data to support harmonized regulation of lift and structural safety. To further reduce sudden changes in net lift and maintain flight path stability, the release operation can be carried out in incremental stages.

In a yet other embodiment, the airship may comprise a recirculation path. The term *"recirculation path"* as used throughout the present disclosure refers to a closed or semi-closed channel configured to transfer stored hydrogen from the envelope storage to the fuel cell. The hydrogen flows through the recirculation path under controlled conditions for reprocessing as a fuel input. Incorporating the recirculation path enables partial reuse of previously accumulated hydrogen, improving fuel efficiency and enabling a unified hydrogen management strategy across energy generation and lift. When the energy demand increases or when excess lift is detected, the controller routes hydrogen from the envelope storage through the recirculation path to the fuel cell. The routing of hydrogen provides supplemental fuel and gradually reduces buoyancy by decreasing the gas volume in the envelope. The envelope can be used as a temporary fuel and buoyancy reservoir, supporting dynamic load balancing and increasing endurance without the requirement for separate storage units. The recirculation path supports thermal conditioning of the hydrogen before reaching the fuel cell. For long-distance or high-altitude missions, the feedback structure enhances closed-loop hydrogen utilization and reduces reliance on the hydrogen tank for primary supply.

In another embodiment, the recirculation path may comprise a secondary pressure regulator. The term *"secondary pressure regulator"* refers to a pressure adjustment component situated within the recirculation path, wherein the pressure adjustment component controls the pressure of hydrogen transferred from the envelope storage to the fuel cell. The regulator makes sure that the hydrogen that is received from the envelope storage comprises appropriate pressure range required for an effective electrochemical reaction. By stabilizing the pressure of hydrogen, the secondary pressure regulator minimizes inefficiencies induced by fluctuation and avoids running failure of the fuel cell. The incorporation of a secondary pressure regulator facilitates differential control over the primary regulator, enabling separate modulation of pressure parameters for energy and lift subsystems. The differential control facilitates simultaneous adjustments for altitude and energy load changes without interference between them. The secondary pressure regulator provides a consistent inflow rate into the fuel cell during decreasing envelope pressure or environmental fluctuations. Moreover, localized pressure regulation at the recirculation level allows for maintenance and replacement of parts without affecting the upstream hydrogen supply chain. The secondary pressure regulator improves control precision and allows for gradual withdrawal of lift gas for energy conversion during transition flight conditions.

Optionally, heat generated by the fuel cell may also be transferred to hydrogen stored in envelope storage. The heat transfer also helps to perform at least one of the internal temperature increase of stored hydrogen, decrease of hydrogen density in order to promote the lifting potential of the airship, and avoidance of condensation of the hydrogen in envelope storage. The term *"heat transfer"* refers to the redirection of thermal energy from the exothermic reaction of fuel cell to a nearby or fluidically connected hydrogen containment space. Increasing the internal temperature of stored hydrogen raises the molecular velocity of gas particles, thereby reducing gas density. Reduction in density results in a rise in buoyant force because of the higher differential between the hydrogen and the surrounding ambience. Controlled application of heat to avoid condensation within the envelope storage during cold weather or high-altitude ambiences prevents condensation from developing into water retention, which imposes mass and degrades lifting effectiveness. Lift characteristics are kept constant and predictable by keeping the hydrogen in the vapor phase. Thermal regulation of the envelope minimizes the mechanical fatigue brought on by expansion (temperature-induced) and contraction. The re-use of waste heat improves thermal energy recycling, reducing the need for auxiliary heating subsystems and supporting energy-efficient operation.

In a further embodiment, the airship comprise an adaptive control unit. The term *"adaptive control unit"* refers to a computational or logical controller capable of dynamically regulating components based on real-time data inputs and environmental feedback. The adaptive control unit dynamically regulates at least one of the pressure regulator, the fuel cell, the flow splitter, the low-pressure pump, the valve, the flow modulator, the bleeding duct, and the secondary pressure regulator. The adaptive control unit also regulates flight stability and energy consumption based on at least one environmental condition. The term *"environmental condition"* refers to factors such as temperature, atmospheric pressure, wind speed, humidity, solar exposure, and ambient light. The airship can maintain stable flight and effectively respond to unanticipated disturbances by adjusting component behavior in real-time based on environmental inputs. In an exemplary aspect, during high-speed wind conditions, the control unit can enhance hydrogen venting through the bleeding duct to reduce excess lift, or redirect hydrogen flow to boost energy supply during turbulence. The control unit adjusts component setpoints prior to critical thresholds being reached by performing predictive regulation (based on anticipated flight paths). Said adjustment reduces the chance of failure because of lagging responses and helps with active energy allocation.

In a yet other embodiment, the envelope storage may comprise a reservoir filled with a fluid (such as helium, Carbon Dioxide, Sulfur Hexafluoride etc.) of a first density, where the first density is higher than the density of hydrogen. The reservoir is configured to receive the second fraction. The term *"reservoir"* as used throughout the present disclosure refers to a separate internal compartment or bladder within the envelope structure that is configured to retain either fluid or gas media. The reservoir is fluidically coupled to an auxiliary storage compartment via a transfer manifold. The auxiliary storage compartment is disposed outside of the envelope storage. The transfer manifold is configured to transfer the fluid between the reservoir and the auxiliary storage compartment to control the lifting force. By altering the amount of high-density fluid within the reservoir, the effective buoyancy of the envelope is modulated. For example, to increase lift, the fluid is transferred out of the reservoir, whereas to decrease lift, the fluid is reintroduced into the reservoir. Aforesaid arrangement allows altitude adjustments without altering the quantity of hydrogen, thereby avoiding wasteful venting or unnecessary energy consumption.

In a yet other embodiment, the transfer manifold may comprise a flow controller to control flow of the fluid between the reservoir and the auxiliary storage. The term *"flow controller"* refers to a regulation device capable of modifying the direction, speed, or volume of fluid being exchanged through the transfer manifold. Controlling the fluid transfer rate enables accurate regulation of buoyancy modulation via fluid mass adjustments within the reservoir. The flow controller can operate under electronic, hydraulic, or pneumatic actuation based on inputs (from onboard sensors or programmed logic routines). During vertical movement, fluid removal from the reservoir increases lift, while during descent, fluid re-entry reduces lift. Having a regulated manifold supports continuous, low-impact buoyancy tuning without disturbing hydrogen volume or pressure levels. The separation of fluid control from hydrogen systems provides a redundant altitude control mechanism, particularly useful during rapid descent or altitude-holding maneuvers when hydrogen adjustments may be too slow or inappropriate. The controller also helps to stabilize center of gravity and reduce oscillations during acceleration or deceleration by redistributing mass within the airship structure in conjunction with aerodynamic control surfaces.

In another embodiment, the reservoir may comprise a first section to store the fluid and a second section to receive and store hydrogen. The term *"first section"* refers to an isolated internal chamber designed to retain fluid of higher density than hydrogen. The term *"second section"* refers to a distinct compartment within the reservoir capable of receiving and temporarily storing hydrogen gas. The dual-section design permits sequential or simultaneous use of both fluids and gases for different operational needs. For instance, the second section may serve as a pressure buffer or intermediate staging area for hydrogen recirculation. The arrangement allows transfer of mass between fluid and gas domains within a compact footprint, facilitating real-time control over both lift and energy usage without external reservoirs. Storing hydrogen within a portion of the reservoir also assists in pressure balancing and helps dampen volumetric shifts within the main envelope. The separated design avoids unwanted mixing or contamination and enables modular maintenance, wherein each section can be accessed or replaced independently based on performance degradation or cycle life.

In a yet other embodiment, the envelope storage may be disposed outside of an envelope. The term *"disposed outside"* refers to a structural arrangement where the envelope storage is located externally relative to the primary gas-containing balloon or skin of the airship. Aforesaid configuration enables thermal isolation, modular maintenance, and external inspection without compromising the integrity of the primary envelope. By placing the envelop storage outside the envelope, the hydrogen can be easily routed, cooled, or vented under emergency situations. External positioning facilitates heat dissipation and avoids pressure buildup that could impact internal components. By physically separating the buoyancy system from structural deformation of the airship, isolating the storage improves the resistance of airship to impacts, turbulence, and mechanical stress. The external envelope storage can also be fabricated using different material specifications or protective coatings suitable for high exposure conditions, thereby expanding the range of operating altitudes and environments.

### DETAILED DESCRIPTION OF DRAWINGS

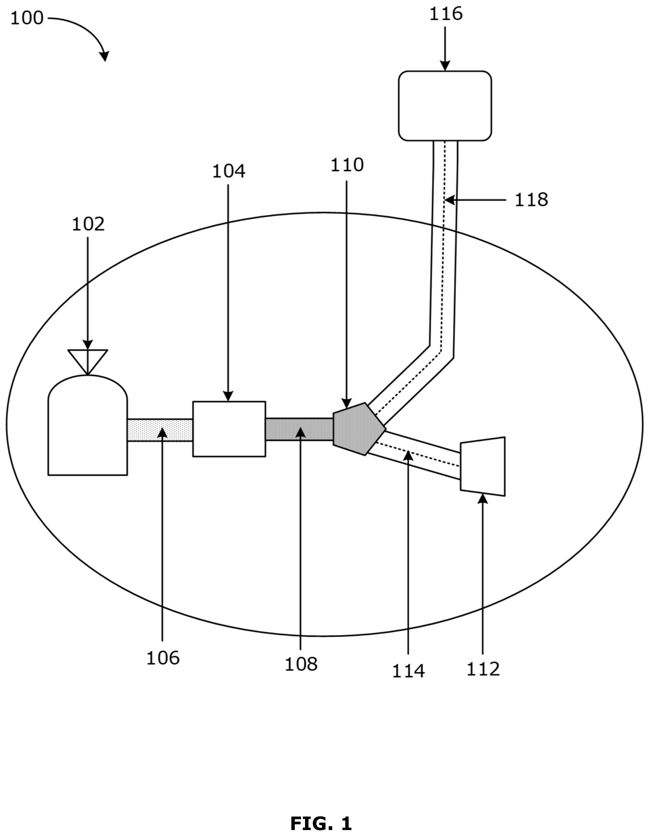

Referring to **FIG. 1****,** there is shown a diagram of an airship **100** as per one embodiment of the present disclosure. The airship **100** comprises a hydrogen tank **102.** The hydrogen tank **102** refers to a pressurized containment vessel structured to store molecular hydrogen in gaseous form at a first pressure. The first pressure refers to a value greater than ambient atmospheric pressure, enabling denser accumulation of hydrogen in a confined volume. The hydrogen tank **102** may include internal lining or composite reinforcements for hydrogen compatibility and may be integrated with thermal insulation features to maintain stability under varying environmental conditions. The hydrogen tank **102** may be fabricated using metal alloys or carbon composite materials selected for structural integrity and low hydrogen permeability. The hydrogen tank **102** may be situated in a lower payload bay or embedded into a structural chamber of the airship **100.** The stored hydrogen in the hydrogen tank **102** is maintained in a static or passive condition until a downstream operational requirement initiates gas transfer for energy generation or lift production within the airship **100.**

In a first aspect, the airship **100** further comprises a pressure regulator **104.** The pressure regulator **104** receives a first hydrogen stream **106** from the hydrogen tank **102** and modifies a pressure level of the first hydrogen stream **106** to generate a second hydrogen stream **108.** The pressure regulator **104** may include diaphragm-based or spring-based regulation mechanisms with adjustable control parameters. The pressure level of the second hydrogen stream **108** is maintained at a level lower than the first pressure, compatible with safe operation of downstream components. The pressure regulator **104** is integrated with gas-tight seals and inlet-outlet valve pathways that prevent hydrogen leakage during regulation. The pressure regulator **104** may include manual override or electronic control circuitry for dynamic tuning of outlet pressure. The second hydrogen stream **108** exits the pressure regulator **104** through a downstream outlet port and enters subsequent subsystems of the airship **100** where further division or application of the hydrogen is performed as required by the operational mode.

In a second aspect, a flow splitter **110** is connected downstream of the pressure regulator **104** to receive the second hydrogen stream **108** and divide the second hydrogen stream **108** into a first fraction **114** and a second fraction **118.** The flow splitter **110** comprises dual or multi-branch flow control channels. The first fraction **114** is routed along a first channel and the second fraction **118** is routed along a second channel. The flow splitter **110** may incorporate flow dividers, electronic valves, or dynamic ratio control mechanisms that adjust the proportion of the second hydrogen stream **108** delivered to each output channel. Division of the flow may be static or controlled in real time based on altitude, internal pressure feedback, or energy demand parameters. The flow splitter **110** enables functional segregation of the hydrogen supply by determining allocation for propulsion-related systems and buoyancy systems independently. Flow balancing structures may be disposed within the splitter to maintain laminar flow distribution and minimize pressure drop across the bifurcation junctions.

In a third aspect, the airship **100** includes a fuel cell **112** positioned to receive the first fraction **114** of the second hydrogen stream **108.** The fuel cell **112** produces electrical energy by facilitating an electrochemical reaction between hydrogen from the first fraction **114** and atmospheric oxygen. The fuel cell **112** may comprise a proton exchange membrane, an anode electrode, and a cathode electrode with catalyst material supporting hydrogen dissociation. The fuel cell **112** outputs electrical power to drive avionics, propulsion, sensors, or control electronics within the airship **100.** Unused hydrogen and water vapor by-products may be routed to secondary components for thermal recovery or gas recirculation. The fuel cell **112** may be coupled with a control unit that manages input flow rates, electrical load balancing, and operational temperature conditions. The fuel cell **112** structure may be shielded against mechanical vibration and housed in an enclosure isolated from lifting gas systems to prevent cross-contamination of gas supply lines.

In a fourth aspect, an envelope storage **116** is connected to receive the second fraction **118** of the second hydrogen stream **108.** The envelope storage **116** refers to a flexible or semi-rigid containment structure configured to accumulate the second fraction **118** of hydrogen gas. The accumulated hydrogen within the envelope storage **116** provides a lifting force to maintain the airship **100** in an elevated state. The envelope storage **116** may be formed using gas-impermeable films or composite membranes bonded to a structural frame or suspended within a hull cavity. The internal volume of the envelope storage **116** is expandable and may incorporate reinforcement members or partitioned zones to regulate deformation and control center-of-lift characteristics. The envelope storage **116** is optionally monitored via pressure sensors or volume displacement transducers to enable adaptive control of hydrogen fill level. Hydrogen retained in the envelope storage **116** may be selectively vented, redistributed, or recirculated depending on altitude targets, load shifts, or emergency descent operations.

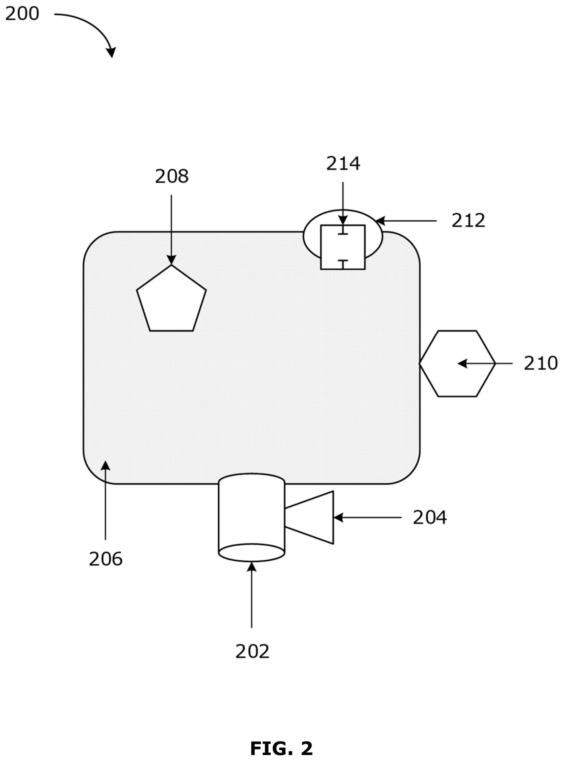

Referring to **FIG. 2****,** there is shown an envelope storage **200** comprising a pressure and flow control arrangement as per an embodiment of the present disclosure. An inlet port **202** is disposed at a lower region of the envelope storage **200** and facilitates entry of hydrogen gas, thereby creating an internal hydrogen volume **206.** A flow modulator **204** is disposed adjacent to the inlet port **202** and enables control of incoming hydrogen flow. The internal hydrogen volume **206** serves as the accumulation region within the envelope storage **200** for lift generation. A first pressure sensor **208** is disposed within the envelope storage **200** to determine an internal pressure of the hydrogen accumulated within the internal hydrogen volume **206.** A second pressure sensor **210** is disposed outside the envelope storage **200** and measures external atmospheric pressure exerted onto the envelope structure. A bleeding duct **212** is disposed on an upper portion of the envelope storage **200** to provide an outlet for hydrogen discharge under controlled conditions. A valve **214** is operatively coupled to the bleeding duct **212** to regulate release of hydrogen from the internal hydrogen volume **206** to an external environment. Measurement data obtained from the first pressure sensor **208** and the second pressure sensor **210** collectively contribute to regulation of hydrogen intake through the flow modulator **204** and discharge through the valve **214.**

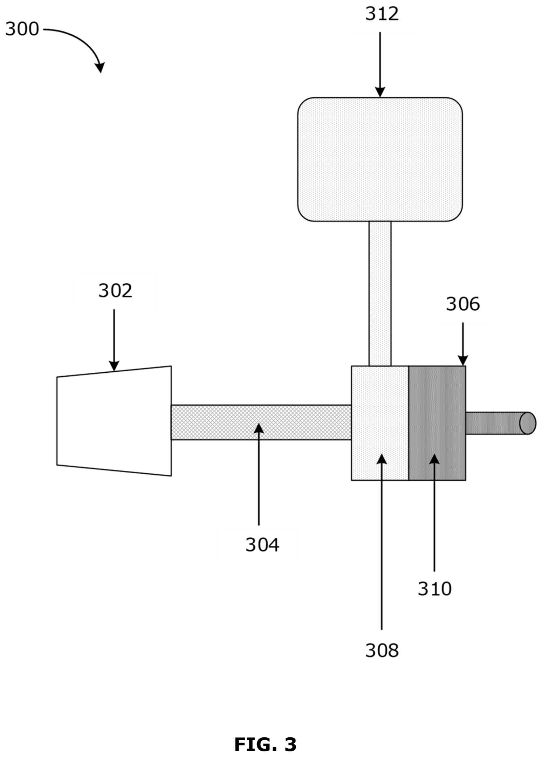

Referring to **FIG. 3****,** there is shown a schematic diagram **300** featuring a hydrogen separator **306** for managing a discharge stream **304** from a fuel cell **302** as per one embodiment of the present disclosure. The fuel cell **302** receives hydrogen for electrochemical reaction and generates the discharge stream **304** as a by-product of energy production. The discharge stream **304** comprises a mixture of unreacted hydrogen **308** and water vapor **310.** The hydrogen separator **306** receives the discharge stream **304** and separates hydrogen **308** from the remaining components. The separated hydrogen **308** is directed vertically into an envelope storage **312** for accumulation to generate lift. Water vapor **310** is expelled horizontally from the hydrogen separator **306** into the surrounding environment or into a secondary processing unit. The hydrogen separator **306** may include porous membranes, thermal splitters, or material-selective channels to partition the discharge stream **304** into its constituent gases. Separation of hydrogen **308** from water vapor **310** allows reuse of residual hydrogen for buoyancy purposes while safely venting or condensing non-combustible exhaust gases. The directionality of the hydrogen **308** and water vapor **310** discharge pathways may be maintained using unidirectional valves or pressure differential systems.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An airship (100), comprising:
- a hydrogen tank (102) is configured to store hydrogen at a first pressure;
- a pressure regulator (104) configured to:
- receive a first hydrogen stream (106) from the hydrogen tank (102); and
- regulate the pressure of the first hydrogen stream (106) to a second level to generate a second hydrogen stream (108);
- a flow splitter (110) configured to:
- receive the second hydrogen stream (108) from the pressure regulator (104); and
- split the second hydrogen stream (108) into a first fraction (114) and a second fraction (118);
- a fuel cell (112, 302) is configured to:
- collect the first fraction (114) of the second hydrogen stream (108); and
- generates electrical energy from the collected first fraction (114) of the second hydrogen stream;
- an envelope storage (116, 200, 312) is configured to:
- receive the second fraction (118) of the second hydrogen stream (108); and
- accumulate the received second fraction (118) of hydrogen to generate a lifting force, and
wherein the flow splitter is configured to dynamically adjust a capacity of the first fraction (114) and the second fraction (118).

2. The airship (100) according to claim 1, wherein the flow splitter (110) is configured to dynamically adjust the capacity of the first fraction (114) and the second fraction (118) based on at least one factor selected from:
- an energy demand;
- a required buoyancy force; and
- an internal pressure within the envelope storage (116, 200, 312).

3. The airship (100) according to claims 1 to 2, further comprising a low-pressure pump configured to:
- receive the second fraction (118) of the second hydrogen stream (108) from the flow splitter (110); and
- transfer the second fraction (118) to the envelope storage (116, 200, 312).

4. The airship (100) according to claims 1 to 3, wherein the fuel cell (112, 302):
- generates heat; and
- releases a discharge stream (304) comprising water vapor (310) and unused hydrogen (308), wherein the unused hydrogen is transferred to the envelope storage (116, 200, 312).

5. The airship (100) according to claims 1 to 2, further comprising a hydrogen separator (306) configured to:
- receive the discharge stream (304) from the fuel cell (112, 302);
- separate hydrogen (308) from the discharge stream (304); and
- transfer the separated hydrogen (3008) to the envelope storage (116, 200, 312).

6. The airship (100) according to claims 1 to 3, wherein the envelope storage (116, 200, 312) is configured to dynamically adjust a volume of the accumulated hydrogen to adjust a lifting force.

7. The airship (100) according to claims 1 to 7, further comprising a valve positioned between the low-pressure pump and the envelope storage (116, 200, 312), the valve being configured to regulate a flow rate of the second fraction (118) into the envelope storage (116, 200, 312).

8. The airship (100) according to claims 1 to 8, further comprising:
- a first pressure sensor (208) disposed into the envelope storage (116, 200, 312), wherein the first pressure sensor (208) is configured to determine and generate a primary output signal indicative the internal pressure within the envelope storage (116, 200, 312), wherein the internal pressure is used to regulate at least one of:
∘ the volume of the second fraction (118);
∘ the low-pressure pump; and
∘ the flow rate of the second fraction (118)
- a second pressure sensor (210) disposed outside the airship (100), the second pressure sensor (210) being configured to measure and trigger a secondary output signal indicative of an external pressure exerted onto a wall of the envelope storage (116, 200, 312);

9. The airship (100) according to claims 1 to 10, wherein the envelope storage (116, 200, 312) comprising a flow modulator (204) disposed at an inlet port (202) of the envelope storage (116, 200, 312), the flow modulator (204) is configured to control at least one of:
- the flow rate of the second fraction (118) into the envelope storage (116, 200, 312);
- total amount of hydrogen accumulation based on output of the first pressure sensor (208) and the second sensor; and
- at least one flight parameter.

10. The airship (100) according to claims 1 to 10, wherein the envelope storage (116, 200, 312) further comprises a bleeding duct (212) configured to discharge hydrogen from the envelope storage (116, 200, 312) into an external environment.

11. The airship (100) according to claims 1 to 11, wherein the bleeding duct (212) is configured to discharge hydrogen based on at least one parameter selected from:
- the determined internal pressure of the envelope storage (116, 200, 312);
- the external pressure exerted onto the wall of the envelope storage (116, 200, 312);
- an external ambient temperature;
- a rate of ascent or descent of the airship (100);
- a current altitude of the airship (100);
- a wind speed surrounding the airship (100); and
- a predefined safety threshold for hydrogen discharge.

12. The airship (100) according to claims 1 to 12, further comprising a recirculation path configured to transfer the stored hydrogen from the envelope storage (116, 200, 312) to the fuel cell (112, 302).

13. The airship (100) according to claims 1 to 13, wherein the recirculation path comprises a secondary pressure regulator to regulate pressure of the hydrogen to be transferred from the envelope storage (116, 200, 312) to the fuel cell (112, 302).

14. The airship (100) according to claims 1 to 14, wherein the heat generated by the fuel cell (112, 302) is transferred to the stored hydrogen in the envelope storage (116, 200, 312) for at least one of:
- increase in an internal temperature of the stored hydrogen;
- reduction in hydrogen density to enhance the lifting force of the airship (100); and
- prevention of hydrogen condensation within the envelope storage (116, 200, 312).

15. The airship (100) according to claims 1 to 15, further comprising an adaptive control unit configured to dynamically regulate:
- at least one of regulate pressure regulator (104), the fuel cell (112, 302), the flow splitter (110), low-pressure pump, the valve, the flow modulator, the bleeding duct (212), and the secondary pressure regulator; and
- a flight stability and an energy consumption based on at least one environmental condition.
